Europäisches Patentamt

European Patent Office

Office européen des brevets

(19)

(11) **EP 1 500 953 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*G01S 15/58* $^{(2006.01)}$   *G01S 7/527* $^{(2006.01)}$

(21) Anmeldenummer: **04015037.7**

(22) Anmeldetag: **25.06.2004**

(54) **Verfahren zum Bestimmen von Zieldaten mittels einer Aktiv-Sonaranlage**

Method for determining target data using an active sonar

Procédé pour la détermination des données cibles utilisant un sonar actif

(84) Benannte Vertragsstaaten:
**AT BE BG CH CY CZ DE DK EE ES FI FR GB GR HU IE IT LI LU MC NL PL PT RO SE SI SK TR**

(30) Priorität: **19.07.2003 DE 10332886**

(43) Veröffentlichungstag der Anmeldung:
**26.01.2005 Patentblatt 2005/04**

(73) Patentinhaber: **ATLAS ELEKTRONIK GMBH**
**28305 Bremen (DE)**

(72) Erfinder:
• **Tielbürger, Dirk, Dr.**
 **24223 Raisdorf (DE)**
• **Ehlers, Frank, Dr.**
 **24235 Wendtorf (DE)**

(56) Entgegenhaltungen:
**EP-A- 0 504 702        EP-A- 0 586 996**
**EP-A- 1 326 088        FR-A- 2 724 029**
**US-A- 3 866 223**

• **PATENT ABSTRACTS OF JAPAN Bd. 1995, Nr. 05, 30. Juni 1995 (1995-06-30) & JP 7 049377 A (TOYOTA MOTOR CORP), 21. Februar 1995 (1995-02-21)**
• **PATENT ABSTRACTS OF JAPAN Bd. 0183, Nr. 33 (P-1759), 23. Juni 1994 (1994-06-23) & JP 6 082551 A (FUJITSU TEN LTD), 22. März 1994 (1994-03-22)**
• **GENS F ET AL: "Estimation of the correlation amplitude of rf signals: application to microcirculation study" ULTRASONICS SYMPOSIUM, 1997. PROCEEDINGS., 1997 IEEE TORONTO, ONT., CANADA 5-8 OCT. 1997, NEW YORK, NY, USA,IEEE, US, 5. Oktober 1997 (1997-10-05), Seiten 1251-1254, XP010271529 ISBN: 0-7803-4153-8**

**Beschreibung**

Die Erfindung betrifft ein Verfahren zum Bestimmen von Zieldaten mit einer Aktiv-Sonaranlage der im Oberbegriff des Anspruchs 1 definierten Gattung.

Mit einer Aktiv-Sonaranlage werden Festziele und bewegte Ziele unter Wasser detektiert und geortet, indem von ausgesendeten Sendeimpulsen reflektierte Anteile, sog. Echosignale, aus unterschiedlichen Empfangsrichtungen empfangen werden. Die Empfangssignale werden bezüglich Laufzeit zwischen Senden und Empfangen und bezüglich der durch den Dopplereffekt entstehenden Frequenzverschiebung zwischen Sende- und Empfangsfrequenz ausgewertet, um Entfernung und Bewegung des Ziels, nämlich seine radiale Geschwindigkeit, das ist die Geschwindigkeit in Richtung zum Empfangsort, zu ermitteln.

Da die Dopplerverschiebung sowohl in die Entfernungs- als auch in die Geschwindigkeitsbestimmung eingeht, wird die Signalform des Sendesignals abhängig von der Aufgabenstellung gewählt. Zum Bestimmen von Entfernung und Geschwindigkeit werden Muster- oder Referenzsignale verwendet, die aus dem Sendeimpuls durch Frequenz- und Zeitverschiebungen abgeleitet werden. Stimmen Empfangssignal und Referenzsignal exakt überein, so gibt die Zeitverschiebung und die entsprechend der Dopplerfrequenz vorgenommenen Frequenzverschiebung des Referenzsignals die Entfernung und Geschwindigkeit des Ziels in Richtung zum Empfangsort an. Die erforderliche Zeit- und Frequenzverschiebung wird durch Korrelation der Echosignale mit den Referenzsignalen ermittelt. Das Korrelationsergebnis weist ein Maximum auf, wenn Empfangs- und Referenzsignal sich decken. Abweichungen führen zu einer Verringerung dieses Wertes. Die Abhängigkeit der Zeit- und Frequenzabweichung zwischen Empfangssignal und Referenzsignal, d.h. der Entfernungs- und Geschwindigkeitsfehler für das Korrelationsergebnis, ist als sog. Ambiguity-Funktion in einer Zeit-Frequenzebene oder einer Entfernungs-Geschwindigkeitsebene darstellbar. Die Ambiguity-Funktion weist beim Fehler Null, also im Ursprung der Zeit-Frequenzebene, ihr Maximum auf und wird abhängig von der gewählten Signalform des Sendeimpulses bei Frequenz- oder Zeitabweichungen kleiner.

Zur Erzielung großer Reichweiten sind große Impulslängen der Sendeimpulse notwendig. Die Ambiguity-Funktion linear frequenzmodulierter Sendeimpulse, sog. LFM-Impulse, weist die Form eines Messerrückens auf, der in der Zeit-Frequenzebene zur Frequenzachse hin gedreht ist und zur Zeitachse ein Winkel einschließt, so dass eine größere Frequenzabweichung des Referenzsignals gegenüber dem Empfangssignal für eine Entfernungsmessung mit geringem Fehler zulässig ist. Die Breite und Dehnung des Messerrückens der Ambiguity-Funktion in der Zeit-Frequenzebene sind dadurch beeinflussbar, dass während der Impulslänge die Sendefrequenz nicht linear über der Zeit, sondern quadratisch oder kubisch über der Zeit ansteigt (A.W. Rihazek "Prinzipals of high resolution radar", McGrowhill Bugcompany 1969, Seite 184). Je größer der Exponent ist, desto stärker flacht der Rücken der Ambiguity-Funktion ab und dreht zur Frequenzachse hin, so dass zugelassene Frequenzabweichungen zwischen Empfangssignal und Referenzsignal noch weiter vergrößert werden können, ohne dass die Entfernungsmessung größere Fehler aufweist. Die mit einem solchen Sendeimpuls erzielbare Empfindlichkeit der Geschwindigkeitsmessung ist deutlich geringer als bei einem LFM-Impuls, dagegen ist die Empfindlichkeit der Entfernungsmessung sehr viel größer. Ein solcher Sendeimpuls wird als dopplerinvarianter Sendeimpuls bezeichnet: Ein solches für den gleichen Zweck eingesetztes Sendesignal ist in EP 0504 702 A2 beschrieben.

Es ist bekannt, einen Sendeimpuls aus zwei frequenzmodulierten Signalen zusammenzusetzen, deren Sendefrequenzen gegenläufig steigen und abnehmen (US 3 866 223). Der Frequenzverlauf über der Zeit ist "v"- förmig oder satteldachförmig. Das Referenzsignal weist den gleichen Frequenzverlauf auf. Die zugehörige Ambiguity-Funktion besteht aus zwei sich kreuzenden Rücken, die um entgegengesetzte Winkel zur Frequenzachse gedreht sind und zur Zeitachse einen gleichen positiven bzw. negativen Winkel einschließen. Die Entfernungsmessung wird durch Korrelation des Empfangssignals mit dem Referenzsignal durchgeführt. Die daraus hervorgehende Korrelationsfunktion weist zwei Korrelationsmaxima auf, die einen zeitlichen Abstand voneinander haben. Mit diesem Zeitabstand und der Zeit, die zwischen dem Senden des Sendeimpulses und dem Auftreten des ersten Maximums in der Korrelationsfunktion vergeht, wird die doppelte Entfernung zum Ziel berechnet. Die durch den Dopplereffekt hervorgerufene Frequenzverschiebung des Echosignals beeinflusst jedoch den Zeitabstand zwischen den Korrelationsmaxima, so dass der Zeitabstand somit ein Maß für die radiale Geschwindigkeit des Ziels ist. Die Genauigkeit der Entfernungs- und Geschwindigkeitsbestimmung ist damit insbesondere von der genauen Bestimmung dieses Zeitabstands abhängig.

Bei einem bekannten Verfahren zur Normierung eines Spracherkennungssystems auf ein Langzeitspektrum, um störende Einflüsse wie unterschiedliche Mikrofon-, Raum- und Sprechcharakteristiken schon vor dem Klassifikator zu eliminieren (EP 0 586 996 A2), wird eine Normierung der cepstralen Merkmale, die in bekannten Spracherkennungssystemen verwendet werden, durch Subtraktion des Mittelwerts der Ceptralvektorkomponenten von dem jeweiligen Cepstralvektor erreicht. Eine vorteilhafte Erweiterung des Verfahrens erfolgt durch adaptive Normierung durch gleitende Mittelwertschätzung mit einem Schleppfenster über der Zeit und adaptiver Zeitkonstante, wodurch sich ein sprecherspezifischer Mittelwertabzug erreichen lässt.

Bei einem bekannten Verfahren zur Detektion von akustischen Signaturen, die von Torpedos herrühren (FR 2 724 029 AI), werden die akustischen Signale eines Überwachungssonars einer Spektralanalyse unterzogen und ein Ensemble von signifikanten Parametern extrahiert. Diese Parameter werden mit Hilfe eines neuronalen Netzes klassifiziert und erlauben nach einer Phase des Lernens durch das neuronale Netz reale Signaturen zu erhalten, die eine Indikation erlauben, ob eine Torpedo-Signatur vorhanden ist oder nicht.

Bei einem bekannten Radarsystem zum Bestimmen der Entfernung und der relativen Geschwindigkeit zwischen einem Ziel und dem Radar (EP 1 326 088 A2) werden von einem Radar Millimeterwellen mit über der Zeit variabler Frequenz in einem "up-modulation interval" und einem "down-modulating interval" ausgesendet. Das von dem Ziel reflektierte Sendesignal besitzt als Empfangssignal gegenüber dem Sendesignal eine Zeit- und eine Frequenzverschiebung. Aus der Zeitverschiebung wird die Zielentfernung und aus der Frequenzverschiebung die radiale Relativgeschwindigkeit zwischen Ziel und Radar ermittelt. Hierzu wird das Empfangssignal einer schnellen Fouriertransformation unterzogen und mittels eines Peakdetektors die Peak-Frequenz eines Peaks im Frequenzspektrum und die Interisität der Peak-Frequenz bestimmt. Eine Gruppierungssektion extrahiert als eine Peak-Gruppe eine Gruppe, in welcher im Frequenzspektrum auftretende Peaks in den Peilwinkeln (beam baerings) fortlaufend sind. Eine Paarungssektion bestimmt Paare der Vielzahl der Peak-Gruppen in einen up-modulating interval und in einem down-modulating interval und bestimmt damit eine Kombination von Peak-Gruppen, die von dem gleichen Ziel verursacht sind. Eine distance/speed claculating section berechnet für die gepaarte Peak-Gruppe die Entfernung zu dem Ziel, das die Peak-Gruppe erzeugt hat und dessen relative Geschwindigkeit auf Basis der Peak-Frequenz in dem up-modulating interval und der Peak-Frequenz in dem down-modulating interval.

Der Erfindung liegt die Aufgabe zugrunde, ein Verfahren der eingangs genannten Art zu schaffen, das eine genaue Bestimmung des Zeitabstands der Korrelationsmaxima auch dann gestattet, wenn das Nutz-/Störverhältnis des Echosignals ausgeprägte Korrelationsmaxima in den Korrelationssignalen nicht deutlich erkennen lässt.

Die Aufgabe ist erfindungsgemäß durch die Merkmale im Anspruch 1 gelöst.

Das erfindungsgemäße Verfahren hat den Vorteil, dass anders als in den Korrelationssignalen in den normierten Betragsverläufen die Maxima sehr viel deutlicher hervortreten und Störungen weitergehend eingeebnet sind, so dass sich die Zeitverschiebung zwischen den Korrelationssignalen durch Bestimmen des Zeitversatzes der Maxima in den normierten Betragsverläufen der Korrelationssignale sehr viel genauer ermitteln lässt. Das Zeit- oder Entfernungsfenster für die Normierung wird vorteilhaft kleiner als die Impulsdauer und größer als die Entfernungsauflösung des Sendeimpulses, also größer als der Kehrwert der Bandbreite des Sendeimpulses, und größer als die radiale Ziellänge gewählt, wobei das Entfernungsfenster gleitend über die Betragsverläufe geschoben wird.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer bevorzugten Ausführungsform der Erfindung werden zur Bestimmung des Zeitversatzes zwischen den Maxima der Betragsverläufe der Korrelationssignale die beiden Betragsverläufe miteinander korreliert, wobei dann das Maximum der Korrelationsfunktion den Zeitversatz angibt.

Gemäß einer vorteilhaften Ausführungsform der Erfindung wird der so bestimmte Zeitversatz als Zeitverschiebung der Korrelationssignale nur dann zur Zieldatenberechnung zugelassen, wenn die Korrelationsfunktion einem vorgegebenen Bewertungskriterium genügt. Diese Bewertung der Korrelationsfunktion macht es möglich, über eine einfache Schwellenentscheidung die Falschalarmrate für die Zieldetektion einzustellen, so dass nur noch die Zeitverschiebungen für die Berechnung der Zieldaten zugelassen werden, die das Einhalten der vorgegebenen Falschalarmrate gewährleisten.

In einer vorteilhaften Ausführungsform der Erfindung wird hierzu in jedem Betragsverlauf der beiden Korrelationssignale die Varianz für vorgebbare Zeitintervalle gebildet, die Korrelationsfunktion durch das Produkt der radizierten Varianzen dividiert und das Divisionsergebnis einer vorgegebenen Schwelle zugeführt. Übersteigt das Divisionsergebnis die Schwelle, so wird die ermittelte Zeitverschiebung zur Berechnung der Zieldaten zugelassen. Die Breite der vorgegebenen Zeitintervalle wird kleiner als die Impulslänge und größer als die Entfernungsauflösung des Sendeimpulses gewählt.

Die Erfindung ist anhand eines in der Zeichnung illustrierten Ausführungsbeispiels im folgenden näher beschrieben. Es zeigen:

Fig. 1 ein Blockschaltbild zur Illustrierung des Verfahrens zum Bestimmen von Zieldaten,

Fig. 2 ein Blockschaltbild zur Illustrierung einer Modifikation des Verfahrens,

Fig. 3 ein Diagramm des zeitlichen Frequenzverlaufs eines Sendeimpulses mit der Impulslänge Tp.

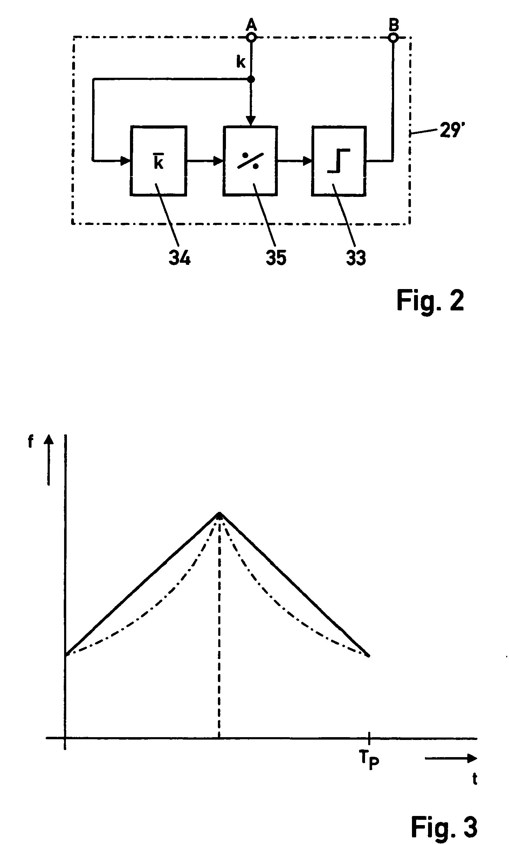

Bei dem nachfolgend beschriebenen Verfahren zur Bestimmung von Zieldaten, wie radiale Geschwindigkeit des Ziels und Entfernung des Ziels zu einem Empfangsort wird am Empfangsort eine Aktiv-Sonaranlage verwendet, die akustische Sendeimpulse der Impulslänge Tp mit einem großen Zeit-Bandbreite-Produkt aussendet, die einen über der Zeit t ansteigenden und einen über der Zeit t abfallenden Frequenzverlauf aufweisen, wie er in Fig. 3 dargestellt ist.

Der Frequenzverlauf kann dabei linear (wie ausgezogen dargestellt) oder hyperbolisch sein, wie er in Fig. 3 strichpunktiert eingezeichnet ist. Ein solcher Sendeimpuls wird als dopplerinvariant bezeichnet. Die Frequenzzu- und -abnahme kann aber auch einen anderen Verlauf aufweisen. Wichtig ist nur, dass Frequenzzunahme und Frequenzabnahme gleichförmig verlaufen. Die ausgesendeten Sendeimpulse werden nach Reflexion als Echosignale aus unterschiedlichen Einfallsrichtungen $\Theta_i$ empfangen.

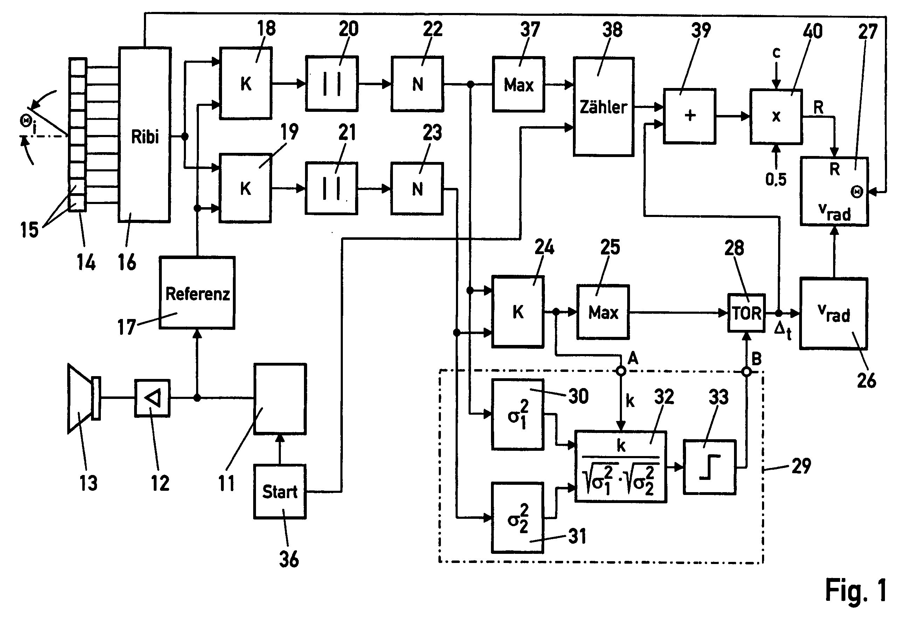

Zur Generierung der beschriebenen Sendeimpulse weist - wie im Blockschaltbild der Fig. 1 dargestellt ist -die Aktiv-Sonaranlage einen Sendegenerator 11 auf, der elektrische Sendesignale generiert, die über einen Verstärker 12 einem elektroakustischen Sendewandler 13 zugeführt und von diesem als Schallimpulse ins Wasser abgestrahlt werden. Zum Empfang der Echosignale besitzt die Aktiv-Sonaranlage eine elektroakustische Empfangsantenne 14, die im Ausführungsbeispiel der Fig. 1 eine sog. Linearantenne ist, die eine Vielzahl von äquidistant aufgereihten elektroakustischen Wandlern oder Hydrofonen 15 aufweist. Eine solche Linearantenne ist als Schleppantenne (Towed Array) oder als eine am Bootskörper befestigte Seitenantenne (Flank Array), mitunter auch als Bordwandstreamer bezeichnet, bekannt. Alle Hydrofone 15 werden gemeinsam betrieben. Durch eine entsprechende Signalverarbeitung aller elektrischen Ausgangssignale der Hydrofone 15 wird in einem sog. Richtungsbildner 16 oder Beamformer eine Richtcharakteristik der Empfangsantenne 14 gebildet, deren Achse größter akustischer Empfangsempfindlichkeit rechtwinklig auf der Empfangsantenne 14 steht oder unter einem spitzen Winkel $\Theta_i$ zur Normalen der Empfangsantenne geschwenkt sein kann. Am Ausgang des Richtungsbildners 16 steht für die jeweilige Einfalls- oder Empfangsrichtung $\Theta_i$ ein aus den Hydrofon-Ausgangssignalen gebildetes sog. Gruppensignal an, das im folgenden als Empfangssignal der Empfangsantenne 14 bezeichnet wird. Aufbau und Wirkungsweise des Richtungsbildners 16 ist bekannt und beispielsweise in der US 4 060 792 oder DE 21 14 373 A1 oder in der DE 100 27 538 A1 beschrieben.

Aus den Empfangssignalen pro Einfalls- oder Empfangsrichtung $\Theta_i$ werden die Zieldaten eines im Seegebiet vorhandenen und von den Sendeimpulsen beleuchteten Ziels nach folgendem Verfahren bestimmt:

In einem Referenzsignalspeicher 17 wird einerseits ein Muster- oder Referenzsignal abgespeichert, das den gleichen ansteigenden Frequenzverlauf wie der pro Sendeperiode abgestrahlte Sendeimpuls aufweist und andererseits ein Muster- oder Referenzsignal abgespeichert, das den gleichen abfallenden Frequenzverlauf wie der pro Sendeperiode abgestrahlte Sendeimpuls aufweist. Das aus der Empfangsrichtung $\Theta_i$ erhaltene Empfangsignal wird in einem Korrelator 18 mit dem erstgenannten Muster- oder Referenzsignal und in einem Korrelator 19 mit dem zweitgenannten Muster- oder Referenzsignal korreliert. Die beiden entstehenden Korrelationssignale werden jeweils einem Betragsbildner 20 bzw. 21 zugeführt, in dem die Beträge der beiden Korrelationssignale als Funktion der Zeit gebildet werden. Anschließend wird jeder Betragsverlauf der Korrelationssignale im Block 22 bzw. 23 auf seine zeitliche Umgebung für vorgebbare Entfernungs- oder Zeitfenster innerhalb einer Sendeperiode normiert, wozu das Zeitfenster gleitend über jeden Betragsverlauf gelegt, im Zeitfenster die Beträge gemittelt und die Mittelwerte zur Normierung verwendet werden. Das gewählte Zeitfenster ist kleiner als die Impulslänge Tp des Sendeimpulses, aber sehr viel größer als die Entfernungsauflösung, also größer als der Kehrwert der Bandbreite, des Sendeimpulses und größer als die radiale Ziellänge. Durch die Normierung des Betragsverlaufs der Korrelationssignale wird erreicht, dass in den Korrelationssignalen vorhandene Maxima deutlicher hervortreten und Störungen weiter eingeebnet werden. Damit hebt sich in jedem normierten Betragsverlauf das zu einem Ziel zugehörige Maximum deutlich hervor, so dass der Zeitversatz zwischen den Maxima in den beiden normierten Betragsverläufen sehr genau festgestellt und die Zeitverschiebung $\Delta t$ zwischen den Korrelationssignalen mit minimiertem Fehler bestimmt werden kann.

Zur Bestimmung des Zeitversatzes der Maxima werden beide normierten Betragsverläufe in einem Korrelator 24 korreliert. Das Maximum der Korrelationsfunktion gibt den Zeitversatz der Maxima und damit die Zeitverschiebung $\Delta t$ zwischen den beiden normierten Betragsverläufen an. Das Maximum der Korrelationsfunktion wird mit Hilfe eines Maximumdetektors 25 bestimmt. Da die Zeitverschiebung $\Delta t$ von der durch den Dopplereffekt hervorgerufenen Frequenzverschiebung des Empfangssignals beeinflusst ist, ist diese Zeitverschiebung $\Delta t$ ein Maß für die radiale Geschwindigkeit des detektierten Ziels. Diese radiale Geschwindigkeit $v_{rad}$ wird in einem Rechenglied 26 berechnet gemäß

$$v_{rad} = \frac{\Delta t \cdot c \cdot B}{f_m \cdot 2 T_p} \qquad (1),$$

wobei $f_m$ die Mittenfrequenz, B die Bandbreite und Tp die Impulslänge des Sendeimpulses und c die Schallgeschwindigkeit im Wasser ist. Die radiale Zielgeschwindigkeit $v_{rad}$ als eines der Zieldaten wird in einem Display 27 zusammen mit der jeweils eingestellten Empfangsrichtung $\Theta_i$ der Empfangsantenne 14 angezeigt.

Um eine vorgegebene Falschalarmrate einzuhalten, wird der bestimmte Zeitversatz zwischen den Maxima der beiden normierten Betragsverläufen nur dann als Zeitverschiebung $\Delta t$ zur Berechnung der radialen Geschwindigkeit zugelassen, wenn die Korrelationsfunktion, aus der er entnommen ist, einem vorgegebenen Bewertungskriterium genügt.

Dies ist in Fig. 1 symbolisch durch ein Tor 28 angedeutet, das bei Erfüllung des Bewertungskriteriums geöffnet wird, so dass der am Ausgang des Maximumsuchers 25 ausgebebene Zeitversatz als Zeitverschiebung $\Delta t$ an das Rechenglied 26 gelangen kann. In einer in Fig. 1 durch Strichpunktierung hervorgehobenen Bewertungseinheit 29 werden hierzu von den normierten Betragsverläufen der beiden Korrelationssignale jeweils die Varianz $\sigma_1^2$ bzw. $\sigma_2^2$ gebildet (Block 30 und 31). Die Varianzen $\sigma_1^2$ und $\sigma_2^2$ und die Korrelationsfunktion k am Ausgang des Korrelators 24 werden einem Rechenglied 32 zugeführt, in dem die Korrelationsfunktion k durch das Produkt der radizierten Varianzen $\sqrt{\sigma_1 2} \cdot \sqrt{\sigma_2^2}$ dividiert wird. Das Divisionsergebnis wird einer Schwelle 33 zugeführt. Übersteigt das Divisionsergebnis die Schwelle 33, so wird dies als Erfüllung des Bewertungskriteriums interpretiert und über den Ausgang B der Bewertungseinheit 29 das Tor 28 aufgesteuert. Durch Anheben oder Absenken der Schwelle 33 kann die Falschalarmrate verkleinert oder vergrößert werden.

In Fig. 2 ist eine alternative Ausführung zu der in Fig. 1 vorhandenen Bewertungseinheit 29 dargestellt. Die Bewertungseinheit 29' wird über die Anschlüsse A und B anstelle der Bewertungseinheit 29 in das Blockschaltbild der Fig. 1 eingesetzt, wobei der Anschluss A wiederum mit dem Ausgang des Korrelators 24 und der Anschluss B mit dem Steuereingang des Tors 28 verbunden wird. Die Bewertungseinheit 29' umfasst einen Mittelwertbildner 34, einen Dividierer 35 und eine Schwelle 33. In dem Mittelwertbildner 34 wird der Mittelwert $\overline{k}$ der am Ausgang des Korrelators 24 abgenommenen Korrelationsfunktion gebildet. Im Dividierer 35 wird die Korrelationsfunktion k durch dem Mittelwert $\overline{k}$ dividiert. Das Divisionsergebnis wird wiederum der Schwelle 33 zugeführt. Übersteigt das Divisionsergebnis die Schwelle 33 so wird dies als Erfüllung des Bewertungskriteriums interpretiert, und über den Anschluss B wird das dem Rechenglied 26 vorgeschaltete Tor 28 geöffnet. Die Falschalarmrate wird wiederum durch die Größe der Schwelle 33 bestimmt.

In einer modifizierten Ausführung der Bewertungseinheit 29' kann anstelle des Mittelwerts auch der Median der Korrelationsfunktion k und in gleicher Weise wie zu Fig. 2 beschrieben weiter verarbeitet werden.

Neben der radialen Zielgeschwindigkeit $v_{rad}$ wird mit dem Verfahren auch die Zielentfernung R, d.h. der Abstand zwischen dem detektierten Ziel und der Empfangsantenne 14, bestimmt und diese in Zuordnung zu der Empfangsrichtung $\Theta_i$ im Display 27 angezeigt. Hierzu wird die Zeit $t_1$ zwischen dem Aussenden des Sendeimpulses, der mittels der Starttaste 36 ausgelöst wird, und dem Auftreten des ersten Maximums in den normierten Betragsverläufen der Korrelationssignale gemessen. Da der Sendeimpuls so generiert wird, dass zunächst der Frequenzverlauf ansteigt, ist das erste Maximum in dem am Normierungsblock 22 abgenommenen normierten Betragsverlauf zu finden, das mittels des Maximumdetektors 37 festgestellt wird. Für die Zeitmessung wird ein Zähler 38 mit dem an den Sendegenerator 11 gegebenen Startimpuls gestartet und mit dem Auftreten des Maximums am Ausgang des Maximumdetektors 37 gestoppt. Am Ausgang des Zählers 38 wird die Laufzeit $t_1$ des Sendeimpulses abgenommen, die sich aus dem durch die Zählfrequenz dividierten Zählerstand ergibt. Dieser Laufzeit $t_1$ wird im Addierer 39 noch die Zeitverschiebung $\Delta t$ hinzuaddiert, und im Multiplizierer 40 wird die Entfernung R gemäß

$$R = (t_1 + \Delta t) \cdot c \cdot 0{,}5 \qquad\qquad (2)$$

berechnet. Der zweite Eingang des Addierers 39 ist ebenfalls an dem Ausgang des Tors 28 angeschlossen, so dass zur Berechnung der Zielentfernung R ebenfalls nur diejenigen Werte der Zeitverschiebung $\Delta t$ zugelassen werden, die das beschriebene Bewertungskriterium erfüllen.

**Patentansprüche**

1. Verfahren zum Bestimmen von Zieldaten mittels einer Aktiv-Sonaranlage, bei dem Sendeimpulse mit pro Sendeperiode über der Zeit ansteigendem und abfallendem Frequenzverlauf ausgesendet und nach Reflexion aus unterschiedlichen Einfallsrichtungen als Empfangssignale empfangen werden, für jede Einfallsrichtung ein Empfangssignal einerseits mit einem Referenzsignal, das den gleichen ansteigenden Frequenzverlauf wie der Sendeimpuls aufweist, und andererseits mit einem Referenzsignal, das den gleichen abfallenden Frequenzverlauf wie der Sendeimpuls aufweist, korreliert wird, die Beträge der beiden Korrelationssignale gebildet werden und die Zeitverschiebung zwischen den Betragsverläufen beider Korrelationssignale als Maß für die Berechnung der Zieldaten bestimmt wird, **dadurch gekennzeichnet, dass** jeder Betragsverlauf auf seine zeitliche Umgebung für vorgebbare Zeitfenster innerhalb einer Sendeperiode normiert wird und dass in jedem so gebildeten normierten Betragsverlauf beider Korrelationssignale das Maximum aufgesucht und die Zeitverschiebung als Zeitversatz der beiden Maxima zueinander bestimmt wird.

2. Verfahren nach Anspruch 1, **dadurch gekennzeichnet, dass** das Zeitfenster wesentlich kleiner als die Impulsdauer und wesentlich größer als die Entfernungsauflösung des Sendeimpulses und größer als die radiale Ziellänge gewählt wird.

3. Verfahren nach Anspruch 1 oder 2, **dadurch gekennzeichnet, dass** die normierten Betragsverläufe der beiden Korrelationssignale miteinander korreliert werden und der Zeitversatz aus dem Maximum der Korrelationsfunktion bestimmt wird.

4. Verfahren nach Anspruch 3, **dadurch gekennzeichnet, dass** der bestimmte Zeitversatz nur dann als Zeitverschiebung zur Berechnung der Zieldaten zugelassen wird, wenn die Korrelationsfunktion einem Bewertungskriterium genügt.

5. Verfahren nach Anspruch 4, **dadurch gekennzeichnet, dass** in jedem normierten Betragsverlauf der beiden Korrelationssignale die Varianz für vorgebbare Zeitintervalle gebildet, die Korrelationsfunktion durch das Produkt der radizierten Varianzen dividiert und das Überschreiten einer vorgegebenen Schwelle durch das Divisionsergebnis als Erfüllung des Bewertungskriteriums interpretiert wird.

6. Verfahren nach Anspruch 4, **dadurch gekennzeichnet, dass** der Mittelwert der Korrelationsfunktion für vorgebbare Zeitintervalle berechnet, die Korrelationsfunktion durch den Mittelwert dividiert und das Überschreiten einer vorgegebenen Schwelle durch das Divisionsergebnis als Erfüllung des Bewertungskriteriums interpretiert wird.

7. Verfahren nach Anspruch 6, **dadurch gekennzeichnet, dass** anstelle des Mittelwerts der Median der Korrelationsfunktion verwendet wird.

8. Verfahren nach einem der Ansprüche 5 - 7, **dadurch gekennzeichnet, dass** die Breite der Zeitintervalle kleiner als die Impulslänge und wesentlich größer als die Entfernungsauflösung des Sendeimpulses gewählt wird.

9. Verfahren nach einem der Ansprüche 1 - 8, **dadurch gekennzeichnet, dass** aus der Zeitverschiebung ($\Delta$t) die radiale Geschwindigkeit des Ziels gemäß

$$v_{rad} = \frac{\Delta t \cdot c \cdot B}{f_m \cdot 2T_p} \qquad (1)$$

berechnet wird, wobei $f_m$ die Mittenfrequenz, B die Bandbreite und $T_p$ die Impulslänge des Sendeimpulses und c die Schallgeschwindigkeit ist.

10. Verfahren nach einem der Ansprüche 1 - 9, **dadurch gekennzeichnet, dass** die Zeit ($t_1$) zwischen dem Aussenden des Sendeimpulses und dem Auftreten des ersten Maximums in den normierten Betragsverläufen der Korrelationssignale gemessen wird und die doppelte Zielentfernung als Produkt der Schallgeschwindigkeit mit der um die Zeitverschiebung ($\Delta$t) vergrößerten Messzeit ($t_1$) berechnet wird.

11. Verfahren nach einem der Ansprüche 1 - 10, **dadurch gekennzeichnet, dass** der ansteigende und abfallende Frequenzverlauf des Sendeimpulses linear oder hyperbolisch gewählt wird und das gleiche Anstiegs- bzw. Abfallverhalten aufweist.

12. Verfahren nach einem der Ansprüche 1 - 11, **dadurch gekennzeichnet, dass** der Sendeimpuls ein Zeit-Bandbreite-Produkt aufweist, das signifikant größer ist als "1".

**Claims**

1. Method for determination of target data by means of an active sonar system, in which transmission pulses are transmitted with a frequency profile which rises and falls over time in each transmission period, and are received as received signals after reflection from different incidence directions, in which a received signal for each incidence direction is correlated on the one hand with a reference signal which has the same rising frequency profile as the transmission pulse, and on the other hand with a reference signal which has the same falling frequency profile as the transmission pulse, in which the magnitudes of the two correlation signals are formed, and the time shift is determined between the magnitude profiles of the two correlation signals as a measure for calculation of the target data, **characterized in that** each magnitude profile is normalized with respect to its time environment for predeterminable time windows within one transmission period, and **in that** the maximum is looked for in each normalized magnitude profile, formed in this way, of the two correlation signals, and the time shift is determined as the time offset of the two maxima with respect to one another.

2. Method according to Claim 1, **characterized in that** the time window is chosen to be considerably narrower than the pulse duration, and is chosen to be considerably longer than the range resolution of the transmission pulse, and is chosen to be greater than the radial target length.

3. Method according to Claim 1 or 2, **characterized in that** the normalized magnitude profiles of the two correlation signals are correlated with one another, and the time offset is determined from the maximum of the correlation function.

4. Method according to Claim 3, **characterized in that** the determined time offset is permitted as the time shift for calculation of the target data only when the correlation function satisfies an assessment criterion.

5. Method according to Claim 4, **characterized in that**, in each normalized magnitude profile of the two correlation signals, the variance is formed for predeterminable time intervals, the correlation function is divided by the product of the square-root of the variances, and the overshooting of a predetermined threshold by the division result is interpreted as satisfaction of the assessment criterion.

6. Method according to Claim 4, **characterized in that** the mean value of the correlation function is calculated for predeterminable time intervals, the correlation function is divided by the mean value, and the overshooting of a predetermined threshold by the division result is interpreted as satisfaction of the assessment criterion.

7. Method according to Claim 6, **characterized in that** the median of the correlation function is used instead of the mean value.

8. Method according to one of Claims 5-7, **characterized in that** the width of the time intervals is chosen to be shorter than the pulse length and considerably longer than the range resolution of the transmission pulse.

9. Method according to one of Claims 1-8, **characterized in that** the time shift (At) is used to calculate the radial velocity of the target using:

$$v_{rad} \; = \; \frac{\varDelta t \; \cdot \; c \; \cdot \; B}{f_m \; \cdot \; 2T_p} \qquad\qquad (1)$$

where $f_m$ is the mid-frequency, B is the bandwidth and Tp is the pulse length of the transmission pulse, and c is the speed of sound.

10. Method according to one of Claims 1-9, **characterized in that** the time ($t_1$) between the transmission of the transmission pulse and the occurrence of the first maximum in the normalized magnitude profiles of the correlation signals is measured, and twice the target range is calculated as the product of the speed of sound and the measurement time ($t_1$) increased by the time shift ($\Delta t$).

11. Method according to one of Claims 1-10, **characterized in that** the rising and falling frequency profile of the transmission pulse is chosen to be linear or hyperbolic, and has the same rising and falling behaviour, respectively.

12. Method according to one of Claims 1-11, **characterized in that** the transmission pulse has a time/bandwidth product which is significantly greater than unity.

**Revendications**

1. Procédé pour déterminer les données d'une cible au moyen d'un équipement à sonar actif avec lequel sont émises des impulsions émises ayant une courbe de réponse croissante et décroissante dans le temps par période d'émission et reçues sous la forme de signaux reçus après avoir été réfléchies depuis différentes directions d'incidence, pour chaque direction d'incidence un signal reçu est corrélé d'un côté avec un signal de référence qui présente la même courbe de réponse croissante que l'impulsion émise et de l'autre côté avec un signal de référence qui présente la même courbe de réponse décroissante que l'impulsion émise, les valeurs des deux signaux de corrélation sont calculées et le décalage dans le temps entre les courbes de valeurs des deux signaux de corrélation est déterminé en tant qu'indication pour le calcul des données de la cible, **caractérisé en ce que** chaque courbe de valeurs est normalisée sur son environnement temporel pendant un créneau temporel pouvant être prédéfini au sein d'une période d'émission et que dans chaque courbe de valeurs normalisée ainsi calculée on recherche le maximum et le décalage dans le temps est déterminé sous la forme du déport dans le temps des deux maximums entre eux.

2. Procédé selon la revendication 1, **caractérisé en ce que** le créneau temporel est choisi considérablement plus petit que la durée de l'impulsion, considérablement plus grand que la résolution de la distance et supérieur à la longueur radiale de la cible.

3. Procédé selon la revendication 1 ou 2, **caractérisé en ce que** les courbes de valeurs normalisées des deux signaux de corrélation sont corrélées entre elles et le déport dans le temps est déterminé à partir du maximum de la fonction de corrélation.

4. Procédé selon la revendication 3, **caractérisé en ce que** le déport dans le temps déterminé n'est autorisé comme décalage dans le temps pour le calcul des données de la cible que lorsque la fonction de corrélation satisfait à un critère d'évaluation.

5. Procédé selon la revendication 4, **caractérisé en ce que** dans chaque courbe de valeurs normalisée des deux signaux de corrélation, la variance est calculée pendant un intervalle de temps pouvant être prédéfini, la fonction de corrélation est divisée par le produit des racines des variances et le dépassement d'un seuil prédéfini par le résultat de la division est interprété comme la réalisation du critère d'évaluation.

6. Procédé selon la revendication 4, **caractérisé en ce que** la valeur moyenne de la fonction de corrélation est calculée pendant un intervalle de temps pouvant être prédéfini, la fonction de corrélation est divisée par la valeur moyenne et le dépassement d'un seuil prédéfini par le résultat de la division est interprété comme la réalisation du critère d'évaluation.

7. Procédé selon la revendication 6, **caractérisé en ce que** la médiane de la fonction de corrélation est utilisée à la place de la valeur moyenne.

8. Procédé selon l'une des revendications 5 à 7, **caractérisé en ce que** la largeur de l'intervalle de temps est choisie inférieure à la longueur d'impulsion et considérablement plus grande que la résolution de la distance de l'impulsion émise.

9. Procédé selon l'une des revendications 1 à 8, **caractérisé en ce que** la vitesse radiale de la cible est calculée à partir du décalage dans le temps ($\Delta$t) selon

$$v_{rad} = \frac{\Delta t.c.B}{f_m.2T_p} \tag{1}$$

$f_m$ désignant la fréquence centrale, B la bande passante et $T_p$ la longueur d'impulsion de l'impulsion émise et c la vitesse du son.

10. Procédé selon l'une des revendications 1 à 9, **caractérisé en ce que** la durée ($t_1$) entre l'émission de l'impulsion émise et l'apparition du premier maximum dans les courbes de valeurs normalisées des signaux de corrélation est mesurée et le double de la distance de la cible est calculé sous la forme du produit de la vitesse du son avec le temps mesuré ($t_1$) accru du décalage dans le temps ($\Delta$t).

11. Procédé selon l'une des revendications 1 à 10, **caractérisé en ce que** la courbe de réponse croissante et décroissante de l'impulsion émise est choisie linéaire ou hyperbolique et présente le même comportement de croissance ou de décroissance.

12. Procédé selon l'une des revendications 1 à 11, **caractérisé en ce que** l'impulsion émise présente un produit temps/bande passante qui est nettement supérieur à « 1 ».

Fig. 1

**Fig. 2**

**Fig. 3**